# FASCICULE DE BREVET EUROPEEN

(11) **EP 2 285 038 B1**
(45) Date de publication et mention de la délivrance du brevet: **15.10.2014**
(21) Numéro de dépôt: 10170718.0
(22) Date de dépôt: 23.07.2010
(51) Int. Cl.: H04L 9/00

(54) **Surveillance de l'activité d'un circuit électronique**
Überwachung des Aktivitäts einer elektronischer Schaltkreis
Surveillance of the activity of an electronic circuit

(30) Priorité: 12.08.2009 FR 0955634
(43) Date de publication de la demande: 16.02.2011
(73) Titulaire: STMicroelectronics (Rousset) SAS, 13790 Rousset (FR)
(72) Inventeur: Wuidart, Sylvie, 83910, Pourrieres (FR)
(74) Mandataire: de Beaumont, Michel

(56) Documents cités:
- WO-A1-02/23312
- Schroeder, Babcock: "Negative bias temperature instability: Road to cross in deep submicron silicon semiconductor manufacturing", , 1 juillet 2003 (2003-07-01), XP002584704, Extrait de l'Internet: URL:http://scitation.aip.org/getpdf/servle t/GetPDFServlet?filetype=pdf&id=JAPIAU0000 94000001000001000001&idtype=cvips&prog=nor mal&doi=10.1063/1.1567461 [extrait le 2010-05-28]
- GIANCANE L ET AL: "A new dynamic differential logic style as a countermeasure to power analysis attacks", ELECTRONICS, CIRCUITS AND SYSTEMS, 2008. ICECS 2008. 15TH IEEE INTERNATIONAL CONFERENCE ON, IEEE, PISCATAWAY, NJ, USA, 31 août 2008 (2008-08-31), pages 364-367, XP031362500, ISBN: 978-1-4244-2181-7

## Description

### Domaine de l'invention

La présente invention concerne de façon générale les circuits électroniques et, plus particulièrement, la surveillance de l'activité d'un circuit, d'un composant ou d'une fonction, d'un circuit électronique au cours du temps.

L'invention s'applique plus particulièrement à la détection d'une anomalie de fonctionnement d'un circuit sous l'effet d'une tentative de piratage.

### Exposé de l'art antérieur

Dans la plupart des circuits ou composants manipulant des quantités considérées comme sensibles du point de vue de leur confidentialité, on cherche à mettre en place des contre-mesures contre d'éventuelles tentatives de piratage de ces données.

Une attaque particulièrement répandue est une attaque dite par canaux cachés qui consiste à analyser la consommation du circuit intégré (DPA - Differential Power Analysis) pendant que celui-ci exécute des opérations manipulant des quantités secrètes.

La détection d'une attaque par canaux cachés s'effectue généralement en surveillant le nombre d'exécutions de l'algorithme sensible. En effet, l'attaquant va effectuer un grand nombre d'hypothèses sur des données et/ou des clés et provoquer l'exécution de l'algorithme un grand nombre de fois en analysant la consommation du circuit.

Une technique habituelle est donc d'utiliser un compteur incrémenté ou décrémenté à chaque nouvelle exécution pour détecter quand un nombre d'opérations trop important est effectué et prendre alors les mesures adéquates. Le compteur du nombre d'opérations est stocké dans une zone de mémoire non volatile (EEPROM) du circuit intégré. En effet, le circuit est généralement réinitialisé entre les attaques successives et il ne faut donc pas perdre l'information. Les contre-mesures peuvent être diverses mais la plus fréquente est l'invalidation du fonctionnement du circuit intégré.

Un inconvénient de cette technique est qu'elle ne prend pas en compte le facteur temps qui est important en cas d'attaque. En effet, le grand nombre d'exécutions du même algorithme est un indice d'attaque mais c'est surtout sa répétition à fréquence élevée qui est signe d'une attaque.

Le document XP002584704 décrit une procédé et dispositif de surveillance d'un signal numérique basés sur un transistor MOS à canal P qu'est placé dans des conditions de dégradation de type d'instabilité en température par polarisation négative.

### Résumé

Il serait souhaitable de disposer d'une solution pour surveiller l'exécution de certaines fonction ou opérations dans un circuit intégré.

Il serait également souhaitable de tenir compte du facteur temporel et, en particulier, de distinguer une répétition d'opérations dans un bref intervalle de temps, synonyme d'une tentative de piratage des informations du circuit, d'un nombre aussi important d'opérations mais suffisamment espacé dans le temps pour qu'il corresponde à une utilisation normale.

Ainsi, un objet d'un mode de réalisation de la présente invention est de pallier tout ou partie des inconvénients des techniques connues de détection de tentatives d'attaques.

Un autre objet d'un mode de réalisation de la présente invention est de proposer une solution simple à mettre en oeuvre et peu encombrante.

Un autre objet d'un mode de réalisation de la présente invention est de proposer une solution susceptible d'être mise en oeuvre pour différentes fonctions ou opérations d'un même circuit.

Plus généralement, un mode de réalisation de la présente invention vise à surveiller l'activité d'une fonction ou opération d'un circuit intégré en terme de nombre d'exécutions au cours du temps.

Pour atteindre tout ou partie de ces objets ainsi que d'autres, il est prévu un procédé de surveillance d'un signal numérique, dans lequel :
un premier transistor MOS à canal P est placé dans des conditions de dégradation de type d'instabilité en température par polarisation négative pendant des périodes où le signal à surveiller est dans un premier état ;
une première information représentative du courant de saturation du premier transistor est mesurée quand le signal à surveiller passe dans un deuxième état ; et
un signal de détection est commuté quand cette première information passe un seuil.

Selon un mode de réalisation de la présente invention, ladite première information est la tension en un point intermédiaire d'une première branche comportant, en série, au moins le premier transistor et un élément résistif.

Selon un mode de réalisation de la présente invention, ladite première information est comparée à une deuxième information correspondante, fournie par un deuxième transistor, ledit signal de détection étant commuté quand la différence entre lesdites informations excède un seuil.

Selon un mode de réalisation de la présente invention, le signal à surveiller est un signal indicateur de l'état d'une opération cryptographique.

On prévoit également un dispositif de surveillance d'un signal numérique comportant :
entre deux bornes d'application d'une tension d'alimentation :
   une première branche comportant, en série, un premier transistor MOS à canal P, un premier interrupteur et un premier élément résistif ;
   une deuxième branche comportant, en série, un deuxième interrupteur, un deuxième transistor MOS à canal P, un troisième interrupteur et un second élément résistif ;
   une troisième branche apte à polariser les transistors à canal P des première et seconde branches ;
   un comparateur des tensions respectives aux bornes des éléments résistifs des première et deuxième branches ; et
   un élément apte à court-circuiter les source et drain du transistor à canal P de la première branche quand le signal à surveiller est dans un premier état.

Selon un mode de réalisation de la présente invention, lesdits premier et troisième interrupteurs sont des transistors MOS à canal N.

Selon un mode de réalisation de la présente invention, le signal numérique à surveiller est appliqué, par l'intermédiaire d'un inverseur, sur les grilles respectives des transistors à canal N des première et deuxième branches et sur la grille d'un transistor à canal P formant ledit élément.

Selon un mode de réalisation de la présente invention, la troisième branche comporte, en série entre lesdites bornes d'application de la tension d'alimentation, un quatrième interrupteur, un transistor MOS à canal P et une source de courant.

Selon un mode de réalisation de la présente invention, lesdits deuxième et quatrième interrupteurs sont des transistors MOS à canal P.

On prévoit également un circuit électronique comportant :
au moins un sous-ensemble exécutant une fonction de cryptographie ; et
au moins un dispositif de surveillance d'un signal indicateur de l'état de ladite fonction.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est un schéma bloc d'un circuit électronique du type auquel s'applique à titre d'exemple la présente invention ;
les figures 2A et 2B sont des chronogrammes illustrant des exemples d'allures de signaux d'activation d'une fonction du circuit de la figure 1, respectivement en fonctionnement normal et en présence d'une attaque ;
la figure 3 est un schéma bloc d'un mode de réalisation de la présente invention ;
la figure 4 est un exemple de réalisation détaillé du circuit de surveillance de la figure 3 ; et
les figures 5A, 5B, 5C et 5D sont des chronogrammes illustrant le fonctionnement du circuit de la figure 4.

De mêmes éléments ont été désignés par de mêmes références aux différentes figures.

### Description détaillée

Par souci de clarté, seuls les étapes et éléments utiles à la compréhension de l'invention ont été représentés et seront décrits. En particulier, les fonctions ou opérations surveillées par les modes de réalisation décrits n'ont pas été détaillés, l'invention étant compatible avec toute fonction ou opération activée par un signal numérique, susceptible d'être exécutée par un circuit intégré et dont on souhaite surveiller la variation de fréquence d'exécution par rapport à un seuil. De plus, dans l'application à la surveillance d'attaques éventuelles, les contre-mesures n'ont pas été détaillées, l'invention étant là encore compatible avec toute contre-mesure usuelle prise suite à la détection d'une tentative d'attaque.

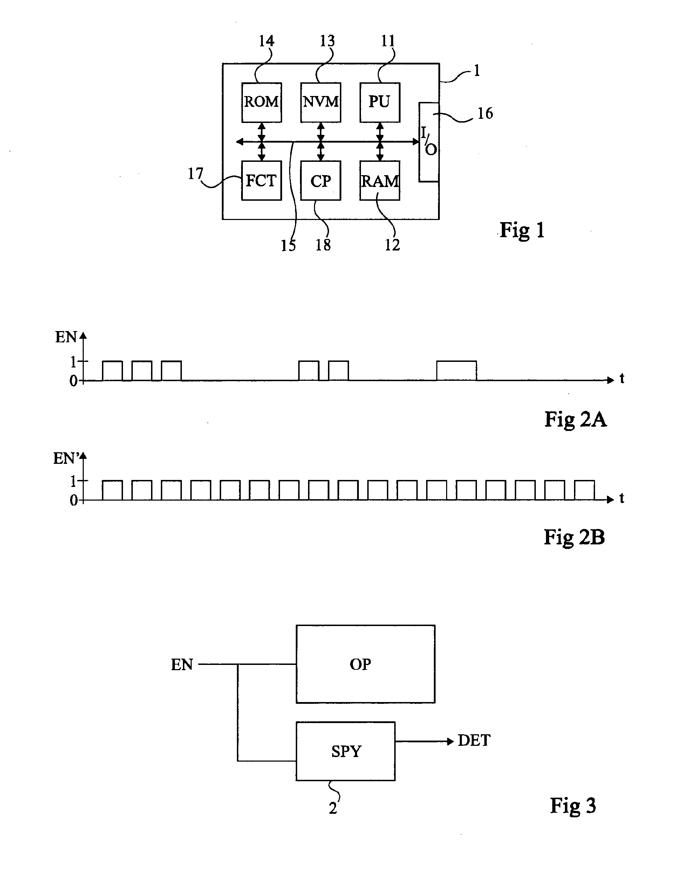

La figure 1 est un schéma bloc d'un exemple de réalisation d'un circuit intégré 1 du type auquel s'applique la présente invention. Un tel circuit comprend généralement une unité de traitement 11 (PU), une ou plusieurs mémoires 12, 13 et 14 parmi lesquelles, par exemple, une mémoire vive (RAM) ou des registres de traitement, une ou plusieurs mémoires non volatiles (NVM) réinscriptibles, une ou plusieurs mémoires non volatiles non réinscriptibles (ROM). Le circuit 1 comporte un ou plusieurs bus 15 de commandes, d'adresses et de données pour que les différents constituants communiquent entre eux ainsi qu'une interface 16 d'entrée/sortie (I/O) pour communication avec l'extérieur du circuit 1. Selon l'application à laquelle il est destiné, le circuit 1 comporte d'autres composants ou circuits pour mettre en oeuvre d'autres fonctions (symbolisées par un bloc 17, FCT). Dans l'application préférée aux composants sécurisés (par exemple de type carte à puce), le circuit 1 comporte en particulier un crypto-processeur 18 (CP) chargé d'exécuter des fonctions mettant en oeuvre des quantités (clés) secrètes, par exemple, des fonctions de chiffrement, déchiffrement, brouillage, de calcul de signature, etc. Selon un autre exemple, le circuit intégré dont on souhaite surveiller l'activité comporte une mémoire et un crypto-processeur (sans unité centrale de traitement).

L'invention sera décrite par la suite en relation avec un exemple d'application à la surveillance d'une activité cryptographique du circuit pour détecter d'éventuelles attaques. Toutefois, elle s'applique plus généralement à la surveillance d'une activité d'un composant ou d'un circuit quelconque dont on souhaite vérifier la fréquence d'occurrences d'une opération par rapport à un seuil. Par exemple, il peut s'agir de vérifier la fréquence d'opérations d'effacement-programmation d'une mémoire non volatile pour, si besoin, différer certaines opérations d'effacement-programmation afin de réduire les contraintes (stress) apportées à la mémoire et d'améliorer sa durée de vie.

Les figures 2A et 2B sont des chronogrammes illustrant les périodes d'activation (symbolisées arbitrairement par un état 1) et de repos (symbolisées arbitrairement par un état 0) d'un signal EN à surveiller. Par exemple, le signal EN est le signal d'activation d'une fonction cryptographique. En variante, il s'agit d'un signal d'état indiquant qu'une telle fonction est active.

La figure 2A illustre un fonctionnement normal au cours duquel l'opération est exécutée une ou plusieurs fois avec des périodes d'inactivité relativement longues. En pratique, les périodes d'inactivité sont supérieures aux périodes d'activité, le temps restant servant, au reste du circuit, à exploiter les données fournies par cette fonction.

La figure 2B illustre l'allure du signal EN en présence d'un fonctionnement anormal (par exemple, en présence d'attaques). La fréquence de répétition des opérations cryptographiques est nettement plus élevée et, surtout, les opérations ne sont pas séparées par des temps de repos. Cela est du au fait qu'un pirate fait exécuter l'opération de cryptographie avec des hypothèses successives sur les données et/ou sur les clés et qu'il réinitialise le circuit sans attendre que ces données aient été traités plus avant. En effet, l'attaque consiste à surveiller la consommation du circuit pendant l'exécution du processus cryptographique de façon à en déduire des informations sur les clés. Réinitialiser immédiatement le circuit pour lui présenter d'autres données ou hypothèses peut également éviter qu'une contre-mesure ne soit déclenchée.

La figure 3 est un schéma bloc d'un mode de réalisation de la présente invention. On suppose que l'on souhaite surveiller une opération OP, par exemple mise en oeuvre par le bloc 18 de la figure 1. On suppose que l'opération dont on souhaite surveiller le déroulement reçoit un signal d'activation EN. Ce signal d'activation est prélevé pour être envoyé sur un circuit 2 de surveillance (SPY) fournissant un signal DET indicateur d'un éventuel fonctionnement anormal. En variante, on prélève le signal d'état EN à l'intérieur de la fonction OP. Le circuit 2 analyse la fréquence des périodes d'activation du signal EN par rapport à un seuil pour être en mesure de détecter un fonctionnement anormal.

Selon les modes de réalisation décrits, on tire profit d'un effet parasite des transistors MOS à canal P, à savoir une instabilité en température sous polarisation négative (NBTI - Négative Bias Temperature Instability). Dans des conditions de polarisation particulières, des charges sont piégées dans la grille du transistor. Cela a pour effet de modifier la tension de seuil (V_{T}) du transistor et, par conséquent, son courant de saturation. Cette dégradation est fonction du temps. La dégradation ou stress du transistor par phénomène NBTI intervient en polarisant la grille du transistor à une tension négative tandis que son drain, sa source et son caisson sont à la masse, ou en appliquant une tension nulle sur sa grille alors que son drain, sa source et son caisson sont au potentiel positif d'alimentation. Ce phénomène se produit habituellement lors des phases de commutation des transistors dans un circuit numérique mais n'est que transitoire. Le phénomène NBTI est connu et on cherche généralement à l'éviter dans un fonctionnement habituel d'un transistor en technologie CMOS.

On utilise ici ce phénomène pour provoquer une dégradation d'un transistor de détection pendant les périodes où la fonction à surveiller est active. On tire alors profit du fait que le transistor retrouve son état normal (non dégradé) au bout d'un temps qui dépend, entre autres, de l'importance de la dégradation subie.

Le phénomène NBTI est connu de la technique. Il est décrit, par exemple, dans l'article "Negative bias temperature instability: Road to cross in deep submicron silicon semiconductor manufacturing" de Dieter K. Schroder and Jeff A. Babcock, paru dans Journal of applied Physics, vol. 94, pp.1-18, en juillet 2003 et dans l'article *"*A comprehensive model of PMOS NBTI degradation" de M. Alam and S. Mahapatra, paru dans Microelectronics Reliability, vol. 45, no. 1, pp. 71-81, en janvier 2005.

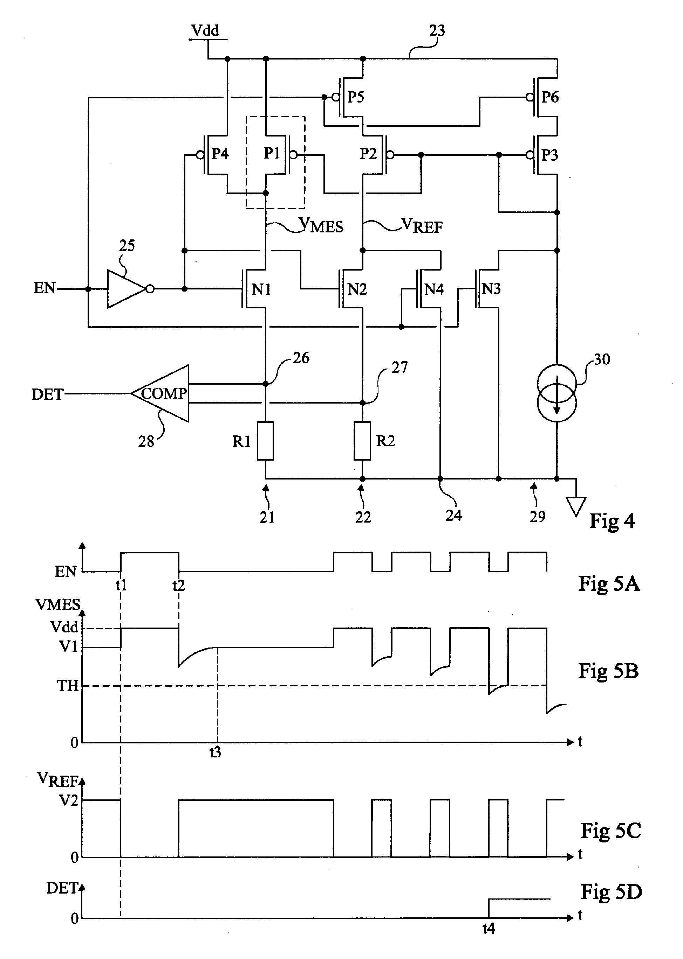

La figure 4 est un schéma électrique détaillé d'un circuit 2 de détection tel qu'illustré en figure 3.

Le principe est de comparer le comportement d'un transistor MOS P1 à canal P qui sera soumis à une dégradation de type NBTI pendant les périodes d'activation de la fonction à surveiller, par rapport à un transistor P2 également à canal P mais non soumis à dégradation pendant ces périodes. Pour cela, deux branches 21 et 22, en parallèle entre deux bornes 23 et 24 d'application d'une tension positive d'alimentation Vdd, comportent chacune, en série, l'un des transistors P1 ou P2, un interrupteur (par exemple, un transistor à canal N) N1, respectivement N2, et un élément résistif R1, respectivement R2. La branche 22 comporte en outre, entre le transistor P2 et la borne 23, un interrupteur (par exemple, un transistor MOS P5 à canal P) commandé par le signal EN d'activation de la fonction à surveiller. Les grilles des transistors N1 et N2 reçoivent l'inverse (inverseur 25) du signal EN d'activation de la fonction. Les noeuds d'interconnexion 26 entre le transistor N1 et la résistance R1, et 27 entre le transistor N2 et la résistance R2, donc les sources des transistors N1 et N2, sont connectés en entrée d'un comparateur 28 (COMP) fournissant le résultat de la détection DET. En fait le comparateur 28 compare indirectement une information relative au courant de saturation des transistors P1 et P2.

La polarisation des transistors P1 et P2 est assurée par une troisième branche 29 comportant, en série entre les bornes 23 et 24, un interrupteur (par exemple, un transistor MOS P6 à canal P) commandé par le signal EN, un transistor P3 à canal P et une source de courant 30, le transistor P3 étant monté en diode (grille et drain reliés) et sa grille étant reliée aux grilles respectives des transistors P1 et P2.

La branche de polarisation 29 est commandable par un transistor MOS N3 à canal N reliant le drain du transistor P3 (connecté à la source de courant 30) à la masse 24. La grille du transistor N3 reçoit le signal d'activation EN. Par ailleurs, un transistor N4, dont la grille reçoit également le signal EN, relie le drain du transistor P2 à la masse.

Le transistor de mesure P1 est placé dans une phase de dégradation à l'aide d'un transistor MOS P4 à canal P court-circuitant sa source et son drain lorsque le signal EN est à l'état haut. Pour cela, la grille du transistor P4 est reliée en sortie de l'inverseur 25. Le caisson (bulk) du transistor P2 comme celui de tous les transistors à canal P du montage est, par construction, relié à sa source (donc au potentiel Vdd).

Les figures 5A, 5B, 5C et 5D sont des chronogrammes illustrant le fonctionnement du circuit de la figure 4. La figure 5A illustre un exemple d'allure du signal EN à surveiller. Les figures 5B et 5C illustrent les allures respectives des tensions V_{MES} et V_{REF} des drains respectifs des transistors P1 et P2. La figure 5D illustre l'allure du signal DET fourni par l'amplificateur 28.

On suppose qu'initialement le transistor de mesure P1 n'est pas stressé. Lors d'une première activation du signal EN (instant t1, figure 5A), les transistors N3 et N4 sont rendus passants. Cela a pour effet de ramener les grilles des transistors P1 et P2 à la masse de même que le drain du transistor P2. Les transistors P5 et P6 qui reçoivent sur leurs grilles respectives le signal EN sont bloqués. La tension V_{REF} est donc nulle (en négligeant la chute de tension dans le transistor N4 à l'état passant). Par ailleurs, par l'inverseur 25, les transistors N1 et N2 sont bloqués. Par conséquent, les deux branches 21 et 22 sont ouvertes. Côté transistor de mesure, le transistor P4 est rendu passant par l'inverseur 25. Par conséquent, les source, caisson et drain du transistor P1 sont au potentiel Vdd (en négligeant la chute de tension dans le transistor P4 à l'état passant), alors que sa grille est à la masse. Le transistor P1 est alors placé dans des conditions de dégradation NBTI et des charges s'accumulent dans son oxyde de grille.

A un instant t2, lorsque le signal d'activation EN est relâché, ce stress disparaît par l'ouverture du transistor P4. Simultanément, les transistors N1, N2 et P5, P6 sont rendus passants et les transistors N3 et N4 sont bloqués. On passe alors en phase de mesure, les deux branches 21 et 22 étant actives. Le comparateur 28 compare les niveaux de tension aux noeuds 26 et 27 qui, dans cette phase, correspondent aux niveaux des tensions V_{MES} et V_{REF} (en négligeant la chute de tension dans les transistors N1 et N2 à l'état passant). La branche 29 de polarisation est activée par l'ouverture du transistor N3. Les transistors P1 et P2 sont donc rendus passants. Comme l'illustre le chronogramme de la figure 5B, l'accumulation des charges qui s'est produit pendant que le transistor P1 était bloqué se traduit par un courant plus faible dans le transistor, d'où une tension V_{MES} inférieure à un niveau nominal V1 (la résistance R1 étant fixe). Côté deuxième branche, la tension V_{REF} prend une valeur V2 conditionnée par la valeur de la résistance R2. Les niveaux V1 et V2 ne sont pas nécessairement identiques. Cela dépend si le seuil de commutation, c'est-à-dire la différence de niveau entre les tensions V_{MES} et V_{REF} (ou inversement) du comparateur 28 est fixé par un décalage (offset) interne à celui-ci ou par les valeurs des résistances R1 et R2. Comme la tension V_{REF} ne varie pas pendant les périodes de mesure, le seuil correspond à une valeur TH de la tension V_{MES} en deçà de laquelle on considère que le transistor P1 a accumulé une dégradation suffisante pour considérer un fonctionnement anormal.

Dans la partie gauche des chronogrammes, on suppose que l'effet parasite NBTI disparaît à partir d'un instant t3, les transistors P1 et P2 redeviennent alors identiques et la tension V_{MES} prend la valeur V1.

La partie droite des chronogrammes illustre un fonctionnement anormal du circuit, par exemple une tentative de piratage. Dans un tel cas, les périodes d'activation du signal EN sont très rapprochées. Il en découle que le transistor P1 n'a pas le temps de revenir dans son état nominal. Quand (instant t4) l'accumulation de charges dans l'oxyde de grille du transistor P1 est telle que la tension V_{MES} passe en dessous du seuil TH, le comparateur 28 commute (signal DET, figure 5D).

L'exploitation du signal DET peut être un blocage du circuit, l'activation d'une commande, le fait de différer une autre action (par exemple dans le cas de l'écriture dans des mémoires non volatiles), etc.

Un avantage des modes de réalisation décrits est qu'il est désormais possible de prendre en compte la fréquence des périodes d'activation du circuit et plus seulement leur nombre.

Un autre avantage est que la dégradation du transistor P1 est indépendante de tout bruit ou perturbation de la tension d'alimentation (les deux bornes de conduction - drain et source - du transistor P1 sont portées au même potentiel pendant les phases de dégradation). Par ailleurs, cette dégradation est insensible aux éventuelles attaques de nature différente, par exemple aux attaques laser.

Un autre avantage est qu'il n'est plus nécessaire de faire des écritures successives dans une mémoire EEPROM, ce qui réduit le stress de cette mémoire.

Un autre avantage est que le circuit de détection prend peu de place. Plusieurs circuits 2 peuvent donc être affectés, dans un même circuit électronique, à la surveillance de signaux d'activation différents en fonction de l'application.

Divers modes de réalisation ont été décrits, diverses variantes et modifications apparaîtront à l'homme de l'art. En particulier la mise en oeuvre pratique de l'invention, notamment le choix des seuils de déclenchement du signal de détection, dépend de l'application et est à la portée de l'homme du métier à partir des indications fonctionnelles données ci-dessus. De plus, bien que l'invention ait été décrite en relation avec un exemple destiné à surveillance de signaux d'activation de fonctions cryptographiques, elle s'applique plus généralement dès que l'on souhaite surveiller une variation de fréquence des périodes d'activation d'un signal numérique. En outre, d'autres circuits de mesure peuvent être envisagés. Par exemple, pour un circuit donné, la référence utilisée par le comparateur 28 peut être fournie par un pont diviseur résistif. Un avantage d'utiliser une branche similaire à la branche du transistor P1 est toutefois de s'affranchir d'éventuelles dispersions.

## Revendications

1. Procédé de surveillance d'un signal numérique (EN), dans lequel :
un premier transistor MOS à canal P (P1) est placé dans des conditions de dégradation de type d'instabilité en température par polarisation négative (NBTI) pendant des périodes où le signal à surveiller est dans un premier état ;
une première information (V_{MES}) représentative du courant de saturation du premier transistor (P1) est mesurée quand le signal à surveiller passe dans un deuxième état ; et
un signal de détection (DET) est commuté quand cette première information passe un seuil (TH).

2. Procédé selon la revendication 1, dans lequel ladite première information est la tension en un point intermédiaire (26) d'une première branche (22) comportant, en série, au moins le premier transistor (P1) et un élément résistif (R1).

3. Procédé selon la revendication 1 ou 2, dans lequel ladite première information (V_{MES}) est comparée à une deuxième information correspondante (V_{REF}), fournie par un deuxième transistor (P2), ledit signal de détection (DET) étant commuté quand la différence entre lesdites informations excède un seuil.

4. Procédé selon l'une quelconque des revendications 1 à 3, dans lequel le signal à surveiller (EN) est un signal indicateur de l'état d'une opération cryptographique.

5. Dispositif de surveillance d'un signal numérique comportant :
entre deux bornes (23, 24) d'application d'une tension d'alimentation (Vdd) :
une première branche (21) comportant, en série, un premier transistor MOS à canal P (P1), un premier interrupteur (N1) et un premier élément résistif (R1) ;
une seconde branche (22) comportant, en série, un deuxième interrupteur (P5), un deuxième transistor MOS à canal P (P2), un troisième interrupteur (N2) et un second élément résistif (R2) ;
une troisième branche (29) apte à polariser les transistors à canal P des première et seconde branches ;
un comparateur (28) des tensions respectives aux bornes des éléments résistifs des première et deuxième branches ; et
un élément (P4) apte à court-circuiter les source et drain du transistor à canal P de la première branche quand le signal à surveiller est dans un premier état.

6. Dispositif selon la revendication 5, dans lequel lesdits premier et troisième interrupteurs sont des transistors MOS à canal N (N1, N2).

7. Dispositif selon la revendication 6, dans lequel le signal numérique à surveiller est appliqué, par l'intermédiaire d'un inverseur (25), sur les grilles respectives des transistors à canal N des première (21) et deuxième (22) branches et sur la grille d'un transistor à canal P (P4) formant ledit élément.

8. Dispositif selon l'une quelconque des revendications 5 à 7, dans lequel la troisième branche (29) comporte, en série entre lesdites bornes (23, 24) d'application de la tension d'alimentation (Vdd), un quatrième interrupteur (P6), un transistor MOS à canal P (P3) et une source de courant (30).

9. Dispositif selon la revendication 8, dans lequel lesdits deuxième et quatrième interrupteurs sont des transistors MOS à canal P (P5, P6).

10. Circuit électronique (1) comportant :
au moins un sous-ensemble (18) exécutant une fonction de cryptographie ; et
au moins un dispositif (2) de surveillance d'un signal indicateur de l'état de ladite fonction, conforme à l'une quelconque des revendications 5 à 9.

## Patentansprüche

1. Ein Verfahren zur Überwachung eines Digitalsignals (EN), wobei folgendes vorgesehen ist:
ein erster P-Kanal MOS Transistor (P1) wird in Degradierbedingungen des negativen Vorspannungstemperaturinstabilitäts-(NBTI)-Typs angeordnet, und zwar während Perioden, wenn das zu überwachende Signal in einem ersten Zustand ist;
eine erste Größe (V_{MES}) repräsentativ für den Sättigungsstrom des ersten Transistors (P1) wird gemessen wenn das zu überwachende Signal in einen zweiten Zustand schaltet; und
ein Detektionssignal (DET) wird geschaltet, wenn diese erste Größe eine Schwelle (TH) übersteigt.

2. Das Verfahren nach Anspruch 1, wobei die erste Größe die Spannung an einem Zwischenpunkt (26) eines ersten Zweiges (22) ist, und zwar aufweisend in Serie mindestens den ersten Transistor (P1) und ein Widerstandselement (R1).

3. Das Verfahren nach Anspruch 1 oder 2, wobei die erste Größe (VMES) verglichen wird mit einer zweiten entsprechenden Größe (V_{REF}) vorgesehen durch einen zweiten Transistor (P2), wobei das zweite Detektionssignal (DET) geschaltet wird, wenn die Differenz zwischen den Größen eine Schwelle übersteigt.

4. Das Verfahren nach einem der Ansprüche 1 bis 3, wobei das zu überwachende Signal (EN) ein Signal ist, welches eine Anzeige bildet für den Zustand eines kryptografischen Betriebs.

5. Eine Vorrichtung zur Überwachung eines Digitalsignals, die folgendes aufweist:
das Anlegen von einer Versorgungsspannung (Vdd) zwischen zwei Anschlüssen (23, 24):
einen ersten Zweig (21), der in Serie einen ersten P-Kanal MOS Transistor (P1), einen ersten Schalter (N1) und ein erstes Widerstandselement (R1) aufweist;
einen zweiten Zweig (22), der in Serie einen zweiten Schalter (P5), einen zweiten P-Kanal MOS Transistor (P2), einen dritten Schalter (N2) und ein zweites Widerstandselement (R2) aufweist;
einen dritten Zweig (29), der in der Lage ist, die P-Kanal Transistoren der ersten und zweiten Zweige vorzuspannen;
einen Komparator (28), der entsprechenden Spannungen an den Widerstandselementen der ersten und zweiten Zweige; und
ein Element (P4), das in der Lage ist, die Source und Drain des P-Kanal Transistors des ersten Zweiges kurzzuschließen, wenn das zu überwachende Signal in einen ersten Zustand ist.

6. Vorrichtung nach Anspruch 5, wobei die ersten und dritten Schalter N-Kanal MOS Transistoren (N1, N2) sind.

7. Vorrichtung nach Anspruch 6, wobei das zu überwachende Digitalsignal über einen Inverter (25) an die entsprechenden Gates der N-Kanal Transistoren der ersten (21) und zweiten (22) Zweige angelegt wird, und an das Gate eines P-Kanal Transistors (P4) der das erwähnte Element bildet.

8. Vorrichtung nach einem der Ansprüche 5 bis 7, wobei der dritte Zweig (29) in Serie zwischen den Anschlüssen (23, 24) zur Anlage der Versorgungsspannung (Vdd), einen vierten Schalter (P6), einen P-Kanal MOS Transistor (P3) und eine Stromquelle (30) aufweist.

9. Vorrichtung nach Anspruch 8, wobei die zweiten und vierten Schalter P-Kanal MOS Transistoren (P5, P6) sind.

10. Eine elektronische Schaltung (1), die folgendes aufweist:
mindestens eine Sub-Anordnung (18), die eine kryptografische Funktion ausführt; und
mindestens eine Vorrichtung (2) zur Überwachung eines Signals, das den Zustand der erwähnten Funktion anzeigt, gemäß einem der Ansprüche 5 bis 9.

## Claims

1. A method for monitoring a digital signal (EN), wherein:
a first P-channel MOS transistor (P1) is placed in degradation conditions of negative bias temperature instability (NBTI) type during periods when the signal to be monitored is in a first state;
a first quantity (V_{MES}) representative of the saturation current of the first transistor (P1) is measured when the signal to be monitored switches to a second state; and
a detection signal (DET) is switched when this first quantity exceeds a threshold (TH).

2. The method of claim 1, wherein said first quantity is the voltage at an intermediary point (26) of a first branch (22) comprising, in series, at least the first transistor (P1) and a resistive element (R1).

3. The method of claim 1 or 2, wherein said first quantity (V_{MES}) is compared with a second corresponding quantity (V_{REF}), provided by a second transistor (P2), said detection signal (DET) being switched when the difference between said quantities exceeds a threshold.

4. The method of any of claims 1 to 3, wherein the signal (EN) to be monitored is a signal indicative of the state of a cryptographic operation.

5. A device for monitoring a digital signal, comprising:
between two terminals (23, 24) of application of a supply voltage (Vdd):
a first branch (21) comprising, in series, a first P-channel MOS transistor (P1), a first switch (N1), and a first resistive element (R1);
a second branch (22) comprising, in series, a second switch (P5), a second P-channel MOS transistor (P2), a third switch (N2), and a second resistive element (R2);
a third branch (29) capable of biasing the P-channel transistors of the first and second branches;
a comparator (28) of the respective voltages across the resistive elements of the first and second branches; and
an element (P4) capable of short-circuiting the source and drain of the P-channel transistor of the first branch when the signal to be monitored is in a first state.

6. The device of claim 5, wherein said first and third switches are N-channel MOS transistors (N1, N2).

7. The device of claim 6, wherein the digital signal to be monitored is applied, via an inverter (25), to the respective gates of the N-channel transistors of the first (21) and second (22) branches and to the gate of a P-channel transistor (P4) forming said element.

8. The device of any of claims 5 to 7, wherein the third branch (29) comprises, in series between said terminals (23, 24) of application of the supply voltage (Vdd), a fourth switch (P6), a P-channel MOS transistor (P3), and a current source (30).

9. The device of claim 8, wherein said second and fourth switches are P-channel MOS transistors (P5, P6).

10. An electronic circuit (1) comprising:
at least one sub-assembly (18) executing a cryptography function; and
at least one device (2) for monitoring a signal indicative of the state of said function, according to any of claims 5 to 9.
